**Europäisches Patentamt**

**European Patent Office**

**Office européen des brevets**

(19)

(11) Numéro de publication: **0 030 892**
**A1**

(12)

# DEMANDE DE BREVET EUROPEEN

(21) Numéro de dépôt: **80401769.7**

(22) Date de dépôt: **10.12.80**

(51) Int. Cl.³: **A 01 G 27/00**

(30) Priorité: **12.12.79 FR 7930515**

(43) Date de publication de la demande:
**24.06.81 Bulletin 81/25**

(84) Etats Contractants Désignés:
**AT BE DE GB IT NL SE**

(71) Demandeur: **GROSFILLEX S.A.R.L. Société à responsabilité limitée dite :
Arbent
F-01107 Oyonnax(FR)**

(72) Inventeur: **Perrin, Maurice
87, rue du Général Andréa Arbent
F-01107 Oyonnax(FR)**

(74) Mandataire: **Caunet, Jean et al,
Cabinet BEAU DE LOMENIE 55, rue d'Amsterdam
F-75008 Paris(FR)**

(54) Bac à plantes empilable.

㊳ Le bac à plantes comporte d'une part un récipient 1, d'autre part une grille 2 écartée du fond 7 en vue de soutenir la terre tout en ménageant un espace inférieur constituant réserve d'eau 6, ledit bac étant en outre muni d'une cheminée 3 d'aération et/ou de remplissage s'étendant depuis la grille jusqu'au bord supérieur 15 du récipient. Selon l'invention, la grille 2 et la cheminée 3 sont une pièce unique en matière plastique venue de moulage, la cheminée étant elle-même constituée par un appendice articulé en 25 sur l'un des bords de la grille, susceptible d'être appliqué contre ladite grille pendant le stockage (illustration en trait mixte) et d'être relevé perpendiculairement à celle-ci lors du montage du bac (illustration en trait plein), jusqu'à ce que ses bords montants s'appuient contre les flancs internes du récipient.

L'invention est applicable aux bacs à plantes en matière plastique, à humidification et aération automatiques.

EP 0 030 892 A1

./...

Croydon Printing Company Ltd.

Fig 2

Bac à plantes empilable.

La présente invention concerne des perfectionnements apportés aux bacs à plantes à humidification et aération automatiques, de façon que ces bacs bien que complets soient empilables.

De tels bacs connus comportent généralement un récipient dans lequel une grille est montée pour séparer la cavité supérieure qui est destinée à recevoir la terre ou autre produit, de la réserve inférieure qui est prévue pour contenir l'eau dans laquelle doit plonger la mèche dont cette grille est munie. Une cheminée d'aération longeant les flancs internes du récipient fait communiquer avec l'extérieur la couche permanente d'air qui se trouve localisée entre le niveau de l'eau et ladite grille ; elle permet également le remplissage de la réserve. Enfin, une tige indicatrice de niveau est guidée dans la cheminée et coopère avec un flotteur posé sur l'eau.

Lorsque ces bacs sont complètement équipés, ils ne sont évidemment pas empilables car certains accessoires, tels que la cheminée et l'indicateur à flotteur, présents dans la cavité supérieure de chacun s'opposent à l'emboîtement dans celle-ci de la partie inférieure d'un autre bac. Dès lors, chaque bac est emballé et livré à l'état complet aux détaillants, sans aucune possibilité de gerbage, de sorte que son encombrement de stockage et de transport est maximal et correspond à son volume extérieur.

La présente invention a pour but de remédier à cet inconvénient en rendant les bacs empilables tout en conservant leur intégralité, en s'opposant à toute perte de pièces et en permettant une mise en service facile, commode et rapide.

Dans ce but et conformément à l'invention, la grille et la cheminée sont une pièce unique en matière plastique venue de moulage, la cheminée étant elle-même constituée par un appendice articulé sur l'un des bords de la grille, susceptible d'être appliqué contre ladite grille pendant le stockage et d'être relevé perpendiculairement à celle-ci lors du montage du bac, jusqu'à ce que ses bords montants s'appuient contre les flancs internes du récipient.

Suivant une forme de réalisation particulièrement avantageuse, la zone d'articulation de la cheminée sur la grille est située dans un angle abattu de celle-ci ; le récipient présente une forme évasée facilitant l'empilage de plusieurs récipients identiques lorsque la cheminée se trouve appliquée contre la grille ; l'appendice destiné à constituer la cheminée présente une forme trapézoïdale pour que ses bords montants puissent s'appliquer en pan coupé contre la partie inférieure des flancs internes du récipient située sous la partie évasée et en regard de celle-ci, l'appendice est prolongé par des rabats triangulaires susceptibles d'être repliés, suivant des lignes prolongeant les bords précédents, pour s'étendre parallèlement aux flancs de ladite partie évasée contigüs au pan coupé, les bords montants desdits rabats étant alors appliqués contre ces flancs le long de règlettes d'appui ; la grille comporte, venu également de moulage, un deuxième appendice destiné à constituer le couvercle de la cheminée, ce deuxième appendice étant articulé sur la grille par au moins une patte déchirable et formant ainsi un organe provisoire de préhension de la grille.

Dès lors, l'appendice de cheminée étant rabattu contre la face inférieure de la grille et fixé à celle-ci, en même temps que l'indicateur à flotteur, au moyen d'un ruban adhésif, cette grille peut être verrouillée élastiquement dans le récipient en libérant complètement sa cavité supérieure qui se trouve ainsi apte à recevoir la partie inférieure d'un autre récipient identiquement équipé ; les bacs de l'invention sont donc empilables et il en résulte un gain de place appréciable au stockage.

Par ailleurs, l'appendice détachable formant couvercle de la cheminée étant appliqué contre un flanc interne du récipient lors du gerbabe, cet appendice constitue un élément de préhension permettant à l'utilisateur de déboîter facilement la grille et ses équipements pour effectuer ensuite le montage définitif du bac.

Divers autres caractéristiques et avantages de l'invention ressortent d'ailleurs de la description détaillée qui suit.

Une forme de réalisation de l'objet de l'invention est représentée, à titre d'exemple non limitatif, sur le dessin annexé :

Sur ce dessin :

- la Fig. 1 est une vue en plan d'un bac à plantes conforme à l'invention ,

- la Fig. 2 et la Fig. 3 sont des élévations-coupes prises suivant les lignes II-II et respectivement III-III de la Fig. 1,

- la Fig. 4 est une vue en plan montrant la grille et certains de ses équipements, tels qu'ils sont obtenus bruts de moulage,

- la Fig. 5 est une vue en plan de dessous illustrant la grille et tous ses équipements, tels qu'ils sont préparés en vue de leur montage dans le récipient formant bac.

Le bac à plantes comporte, ainsi que cela est bien connu, un récipient 1, une grille 2, une cheminée 3 d'aération et de remplissage ainsi qu'un indicateur de niveau 4, tous ces éléments étant généralement constitués par de la matière plastique moulée sous pression. La grille 2 sépare dans le récipient lorsqu'elle y est correctement montée, une cavité supérieure 5 destinée à recevoir la terre, le compost ou autre produit dans lequel les plantes s'enracinent, d'une réserve inférieure 6 prévue pour contenir l'eau d'humidification. Le fond 7 du récipient 1 est solidaire d'au moins un tube de trop plein 8 qui définit par débordement et écoulement vers le dessous de ce fond le niveau minimal 9 de l'eau dans la réserve. La cheminée 3 permet, d'une part, de verser l'eau pour le remplissage de ladite réserve et d'autre part de renouveler l'air de la couche permanente d'air qui se trouve localisée sous la grille 2 au-dessus du niveau 9 de l'eau dans cette réserve ; l'aération de la terre dans la cavité 5 est obtenue à travers la grille 2 grâce à la couche sous-jacente 10 dont l'air est renouvelé grâce à la communication permanente établie avec l'extérieur par la cheminée 3. Con-commitamment, l'humidification de cette terre est obtenue grâce à une mèche, non représentée sur le dessin, mais s'étendant sur un renflement 11 à double pente de la grille 2 pour être en contact de ladite terre, les deux extrémités pendantes de la mèche traversant la grille et plongeant dans l'eau de la réserve 6.

Suivant l'invention, les bacs sont rendus gerbables tout d'abord par le fait que les flancs 12 sont inclinés en forte dépouille et convergent vers le haut. Pour faciliter l'empilage de deux récipients l'un dans l'autre, les flancs 12 de chacun desdits récipients présentent une partie évasée supérieure 13 qui s'étend depuis un niveau intermédiaire 14 situé au-dessus de la grille 2 jusqu'au bord libre 15 du récipient considéré.

Les bacs sont rendus gerbables également par le fait que lors du stockage, tous les éléments qui font normalement saillie dans la cavité 5 sont escamotés de la manière décrite dans ce qui suit.

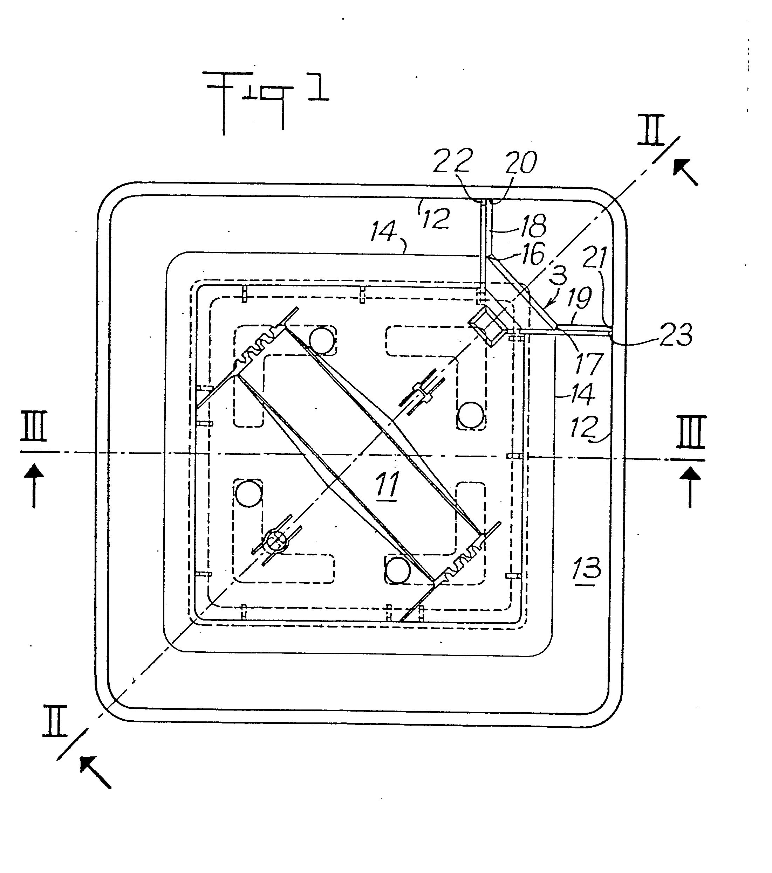

Ainsi que le montre la Fig. 1, la cheminée 3 exempte de couvercle s'étend en biais à 45° entre deux flancs 12 contigus et perpendiculaires ; les bords montants 16 et 17 de cette cheminée se trouvent alors
appliqués contre les flancs 12 considérés entre la grille 2 et le niveau intermédiaire 14, à partir duquel la
partie évasée 13 du récipient s'élève ; dans cette partie
13, la cheminée 3 comporte des rabats latéraux 18 et 19
qui, au lieu de rester en biais, sont amenés à être parallèles auxdits flancs 12 ; les bords montants 20 et
21 de ces rabats sont alors appliqués contre la partie
évasée 13 entre le niveau 14 et le bord libre 15. Les
bords 16, 17, 20, 21 sont normalement en butée contre
des règlettes 22 et 23 faisant saillie à l'intérieur du
récipient.

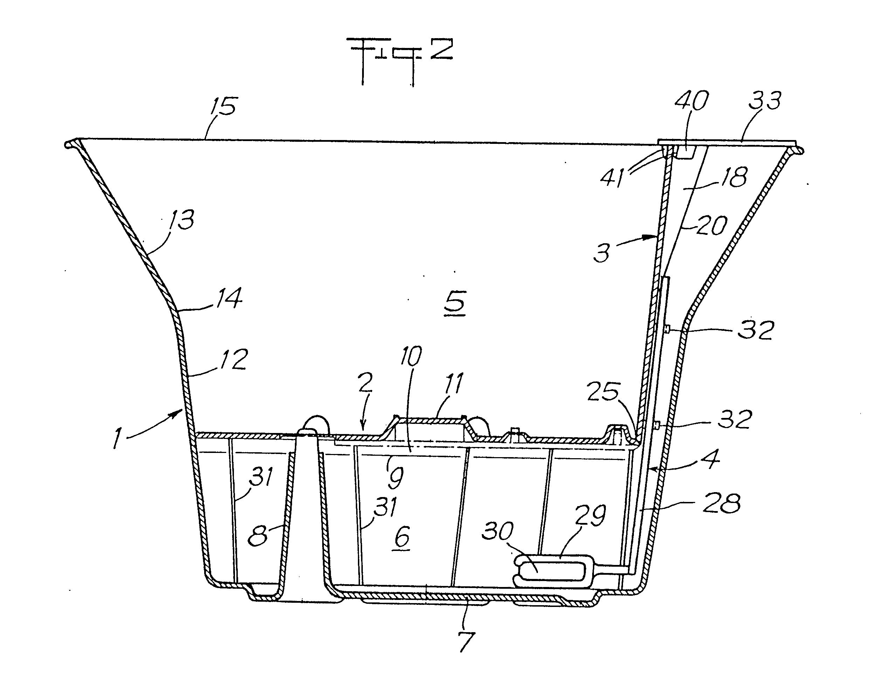

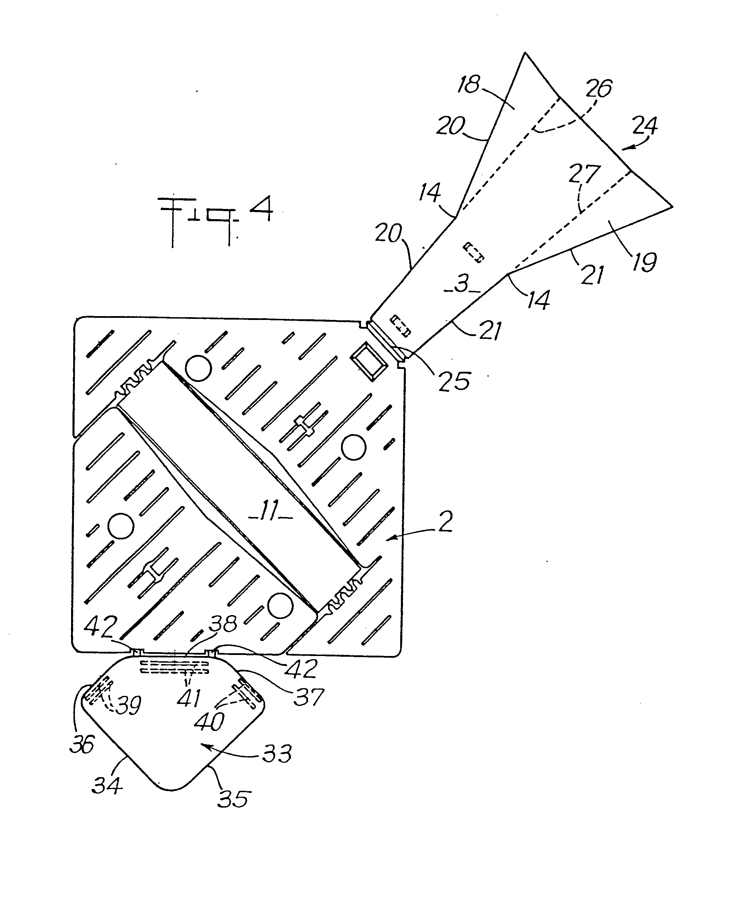

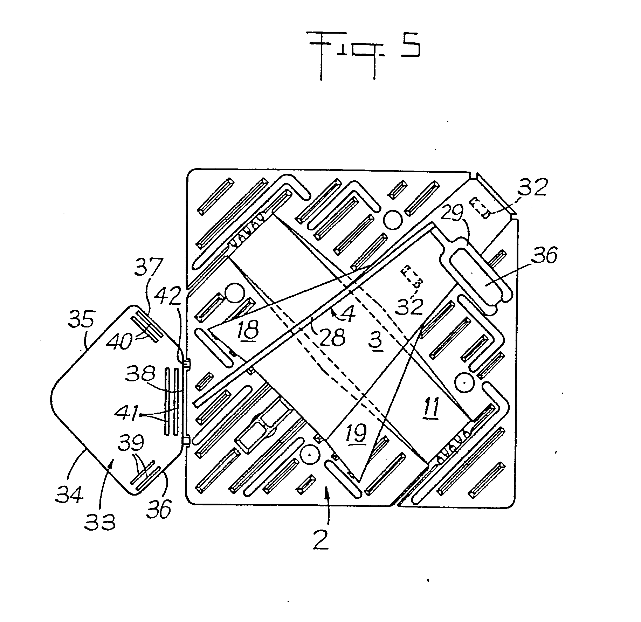

La cheminée 3, telle qu'elle est décrite
ci-dessus en se référant à la Fig. 1, est constituée
par un appendice unique 24 venu de moulage avec la grille
2 et s'étendant symétriquement par rapport à une diagonale de cette dernière. L'appendice 24, tout en faisant
corps avec la grille 2, est cependant articulé par rapport à celle-ci, suivant une zone d'articulation 25
située dans un angle abattu ; dans l'exemple représenté,
la zone d'articulation considérée est obtenue en faisant
venir en creux, lors du moulage, une rainure en V qui
marque dans son épaisseur la grille 2 suivant une ligne
coupant son angle perpendiculairement à la diagonale
de symétrie précitée. Dès lors que la ligne de pliage
25 existe, l'appendice peut être replié, soit pour être
rabattu sous la grille 2 et être appliqué contre celle-ci (représentation en trait mixte sur la Fig.2 et en
trait plein sur la Fig. 5), soit pour être relevé et mis
dans la position d'utilisation (représentée en trait plein
sur la Fig. 2 et décrite en se référant à la Fig. 1). A
cet égard, il est important de remarquer que l'appendice
présente une forme trapézoïdale (Fig. 4) pour correspondre à la partie principale en pan-coupé de la cheminée
3, ses bords longitudinaux 20 et 21 étant destinés à s'appuyer contre les flancs 12 entre la ligne de pliage 25 de la grille 2 et le niveau intermédiaire 14 ; il est également important de remarquer que la partie principale en pan-coupé de l'appendice 24 est solidaire des rabats latéraux 18 et 19 qui ont une forme triangulaire, s'étendent du niveau 14 au bord libre 15 et sont séparés de cette partie en pan-coupé par des lignes de pliage 26 et 27 prolongeant les bords 20 et 21 ; les bords 20 et 21 des rabats 18 et 19 sont destinés, lorsque ces rabats sont repliés parallèlement aux flancs 12, à s'appuyer contre la partie évasée 13 du récipient.

Comme le montrent les Fig. 2 et 5, l'indicateur de niveau 4 est constitué par une tige 28 solidaire à son extrémité inférieure d'une fourchette 29 susceptible de pincer un flotteur 30 pour s'en rendre solidaire.

Dans la position de gerbage (Fig. 5 et illustration en trait mixte de la Fig. 2), l'appendice 24 est rabattu et appliqué contre la face inférieure de la grille 2, puis l'indicateur de niveau 4 est posé sur cette appendice ; l'ensemble est alors maintenu en place grâce à des rubans adhésifs non représentés ; la grille ainsi équipée est ensuite emboîtée dans le récipient 1 jusqu'à buter contre des nervures 31 du récipient et à se verrouiller élastiquement sur des éléments de celui-ci prévus à cet effet.

Dans la position d'utilisation du bac (Fig. 2), la cheminée 3 est reconstituée comme indiqué dans ce qui précède mais après l'avoir équipée de l'indicateur de niveau 4. A cet effet, la tige 28 de cet indicateur est montée coulissante dans des passants 32 venus de moulage avec la partie principale en pan-coupé de l'appendice 24.

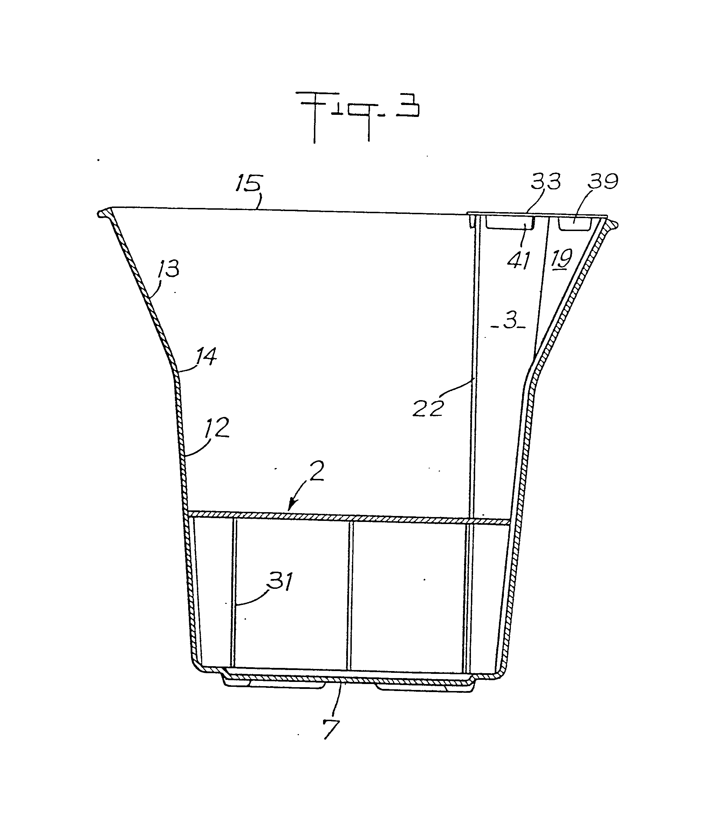

Les Fig. 4 et 5 montrent enfin que la grille 2 est également venue de moulage avec un deuxième appendice 33 destiné à constituer le couvercle de la cheminée, tel qu'il apparait sur les Fig. 2 et 3. L'appendice 33 présente une forme pentagonale, c'est-à-dire pour être plus précis la forme d'un carré dont un angle est coupé. Il s'adapte par conséquent parfaitement à la section droite du conduit de cheminée au niveau du bord libre 15 du récipient puisque ses deux grands côtés contigus 34 et 35 correspondent à la partie évasée 13 du récipient, ses petits côtés 36 et 37 parallèles aux précédents corres-pondent aux rabats 18 et 19 de la cheminée et son côté en biais 38 correspond à la partie en pan-coupé de ladite cheminée. D'ailleurs, les côtés 36 à 38 sont bordés par des paires de languettes 39 à 41, destinées à s'emboîter sur les bords supérieurs des rabats 18, 19 et du pan-coupé de la cheminée.

Cet appendice 33 est articulé par son côté en biais 38 sur un côté de la grille 2 par deux pattes déchirables 42. Ainsi, l'appendice 33 fait corps avec la grille et lorsque celle-ci est montée dans le récipient pour occuper la position de gerbage précitée, ledit appendice 33 se trouve appliqué contre le flanc interne correspondant 12 du récipient. Dès lors, l'appendice 33 ne gène pas pour gerber les bacs et pourtant la place qu'il occupe est extrêmement intéressante. En effet, lorsqu'il s'agit de déverrouiller la grille 2 pour monter la cheminée 3 et l'indicateur de niveau 28, l'appendice 33 forme un organe provisoire de préhension sur lequel on peut tirer. Après extraction de la grille, l'appendice 33 est détaché. Lorsque ladite grille est à nouveau verrouillée dans le récipient et que la cheminée se trouve montée, le couvercle 33 ainsi libéré peut être mis en place sur ladite cheminée.

L'invention n'est pas limitée à la forme de réalisation représentée et décrite en détail car diverses modifications peuvent y être apportées sans sortir de son cadre.

Elle est applicable aux bacs à plantes à humidification et aération automatiques lorsque ces bacs sont réalisés au moins partiellement en matière plastique.

REVENDICATIONS

1. - Bac à plantes comportant d'une part un récipient, d'autre part une grille écartée du fond en vue de soutenir la terre tout en ménageant un espace inférieur constituant réserve d'eau, ledit bac étant en outre muni d'une cheminée d'aération et/ou de remplissage s'étendant depuis la grille jusqu'au bord supérieur du récipient, caractérisé en ce que la grille et la cheminée sont une pièce unique en matière plastique venue de moulage, la cheminée étant elle-même constituée par un appendice articulé sur l'un des bords de la grille, susceptible d'être appliqué contre ladite grille pendant le stockage et d'être relevé perpendiculairement à celle-ci lors du montage du bac, jusqu'à ce que ses bords montants s'appuient contre les flancs internes du récipient.

2. - Bac selon la revendication 1, caractérisé en ce que la zone d'articulation de la cheminée sur la grille est située dans un angle abattu de celle-ci.

3. - Bac selon l'une quelconque des revendications 1 et 2, caractérisé en ce que l'appendice destiné à constituer la cheminée présente sur sa face interne des moyens de coulissement venus de moulage pour l'organe de repérage du niveau d'eau, lui-même solidaire d'un flotteur.

4. - Bac selon l'une quelconque des revendications précédentes, caractérisé en ce que le récipient présente une forme évasée facilitant l'empilage de plusieurs récipients identiques lorsque la cheminée se trouve appliquée contre la grille.

5. - Bac selon la revendication 4, caractérisé en ce que l'appendice destiné à constituer la cheminée présente une forme trapézoïdale pour que ses bords montants puissent s'appliquer en pan coupé contre la partie inférieure des flancs internes du récipient située sous la partie évasée et en ce qu'en regard de celle-ci, l'appendice est prolongé par des rabats triangulaires susceptibles d'être repliés, suivant des lignes prolongeant les bords précédents, pour s'étendre parallèlement aux flancs de ladite partie évasée contigus au pan coupé, les bords montants desdits rabats étant alors appliqués contre ces flancs le long de règlettes d'appui.

6. - Bac selon l'une quelconque des revendications précédentes, caractérisé en ce que la grille comporte, venu également de moulage, un deuxième appendice destiné à constituer le couvercle de la cheminée, ce deuxième appendice étant articulé sur la grille par au moins une patte déchirable et formant ainsi un organe provisoire de préhension de la grille.

Fig 1

II

22  20

12

14

18

16

21

3

19

23

17

14

12

III                    III

11

13

II

Fig 2

Fig-3

Fig. 4

Fig. 5

**Office européen des brevets**

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée |
|---|---|---|
| A | <u>FR - A - 2 127 242</u> (GROSFILLEX)<br><br> * page 3, lignes 5-26; figures 1, 2 *<br><br>---- | 1 |

**CLASSEMENT DE LA DEMANDE (Int. Cl. 3)**

A 01 G 27/00

**DOMAINES TECHNIQUES RECHERCHES (Int. Cl. 3)**

A 01 G 9/00
9/02
27/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| La Haye | 07-03-1981 | HERYGERS |

OEB Form 1503.1  06.78